Europäisches Patentamt

European Patent Office

Office européen des brevets

(19)

(11) **EP 1 226 659 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: **00987081.7**

(22) Anmeldetag: **06.11.2000**

(51) Int Cl.⁷: **H04B 1/707**, H04B 7/26

(86) Internationale Anmeldenummer:
**PCT/DE2000/003881**

(87) Internationale Veröffentlichungsnummer:
**WO 2001/035543 (17.05.2001 Gazette 2001/20)**

(54) **VERFAHREN ZUR SYNCHRONISATION EINER SIGNALÜBERTRAGUNG IN AUFWÄRTSRICHTUNG IN EINEM FUNK-KOMMUNIKATIONSSYSTEM**

METHOD OF CARRYING OUT AN UPLINK SYNCHRONIZATION OF THE SIGNAL TRANSMISSION IN A RADIO COMMUNICATION SYSTEM

PROCEDE DE SYNCHRONISATION D'UNE TRANSMISSION DE SIGNAUX EN SENS ASCENDANT DANS UN SYSTEME DE RADIOTELECOMMUNICATION

(84) Benannte Vertragsstaaten:
**DE ES FR GB IT PT**

(30) Priorität: **06.11.1999 DE 19953486**

(43) Veröffentlichungstag der Anmeldung:
**31.07.2002 Patentblatt 2002/31**

(73) Patentinhaber: **SIEMENS AKTIENGESELLSCHAFT**
**80333 München (DE)**

(72) Erfinder:
• **BAHRENBURG, Stefan**
**28832 Achim (DE)**
• **FRANZ, Volker**
**82178 Puchheim (DE)**

(56) Entgegenhaltungen:
WO-A-97/31429     US-A- 5 446 727
US-A- 5 943 331

EP 1 226 659 B1

**Beschreibung**

Die Erfindung betrifft ein Verfahren zur Synchronisation einer Signalübertragung in Aufwärtsrichtung von zumindest einer Teilnehmerstation zu einer Basisstation eines Funk-Kommunikationssystems. Die Erfindung ist insbesondere für einen Einsatz in einem Mobilfunksystem geeignet.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenanntes CDMA-Teilnehmerseparierungsverfahren (Code Division Multiple Access).

Ein Vorschlag für ein Mobilfunksystem der dritten Generation nach "TD-SCDMA Radio Transmission Technology for IMT-2000", Draft V.0.4, der CATT vom September 1998, basiert auf dem beschriebenen TDD-Modus mit einer Unterstützung eines CDMA-Teilnehmerseparierungsverfahrens. Durch die Verwendung des CDMA-Teilnehmerseparierungsverfahrens können von mehreren Teilnehmerstationen in einem Zeitschlitz gesendete Übertragungsblökke, die im allgemeinen aus einem Datenteil und einer bekannten Trainingssequenz bestehen, von einer Basisstation parallel verarbeitet werden. Hierzu muß jedoch sichergestellt werden, daß die Übertragungsblöcke und insbesondere die jeweiligen Trainingssequenzen innerhalb eines bestimmten Zeitfensters am Ort der Basisstation eintreffen, um eine gesicherte Detektion und Trennung der unterschiedlichen Signale zu gewährleisten. Dieses Problem der Synchronisation der Signalübertragung in Aufwärtsrichtung tritt bei bekannten CDMAbasierten Funk-Kommunikationssystemen in gleicher Weise auf.

Eine Synchronisation der jeweiligen Zeitbasis der Teilnehmerstationen erfolgt nach dem Stand der Technik, wie er beispielsweise bereits aus dem GSM-Mobilfunksystem bekannt ist, daher im allgemeinen bei einer Verbindungsaufbauprozedur, bei der die Basisstation nach einem Empfang eines Signals von einer Teilnehmerstation die Zeitreferenz der jeweiligen Teilnehmerstation durch eine Signalisierung eines Korrekturwertes einstellt. Da sich die Zeitreferenz beispielsweise aufgrund einer Bewegung der Teilnehmerstation laufend verändern kann, muß zur Einhaltung der zeitlichen Synchronität periodisch eine Korrektur der Zeitreferenz der Teilnehmerstation erfolgen. Hierzu wird für die Mobilfunksysteme der dritten Generation vorgeschlagen, eine spezielle Synchronisationsinformation mit einer bestimmten Periodizität zu senden. Die Synchronisationsinformation (SS - Synchronisation Shift) entspricht dabei einer bestimmten Schrittweite in Chip mit einem positiven oder negativen Vorzeichen.

Um eine genaue Regelung der Zeitreferenz zu erhalten, sollte in der Teilnehmerstation eine Änderung der Zeitreferenz auf der Basis eines Zeitmaßstabs, der kleiner als die Chiprate ist, erfolgen. Aufgabe der Erfindung ist es demnach, ein Verfahren und eine Teilnehmerstation anzugeben, die eine einfache Implementierung einer Synchronisation mit einer Sub-Chiprate ermöglichen.

Aus der WO 97/31429 ist ein Verfahren zur Synchronisation der Übertragung von einer Teilnehmerstation zu einer Basisstation eines CDMA-Kommunikationssystems bekannt, bei dem mehrere von der Teilnehmerstation gesendete Funkblöcke mit einer um jeweils 1/2 chip unterschiedlichen Zeitanpassung des Spreizcodes gesendet werden.

Aus der US 5,943,331 sowie der US 5,446,727 sind jeweils CDMA-basierte Kommunikationssysteme bekannt, bei denen die Phase der orthogonalen Codes bzw. die Zeitanpassung der Aussendung in Bruchteilen eines Chips angepaßt werden kann.

Der Erfindung liegt die Aufgabe zugrunde, eine Vereinfachung der Implementierung der Steuerung der Zeitanpassung zu ermöglichen. Diese Aufgabe wird durch das Verfahren mit den Merkmalen des Patentanspruchs 1 und durch die Teilnehmerstation mit den Mitteln des Patentanspruchs 4 gelöst. Vorteilhafte Weiterbildungen der Erfindung sind den abhängigen Patentansprüchen zu entnehmen.

Erfindungsgemäß werden zur Synchronisation der Signalübertragung in Aufwärtsrichtung in der Teilnehmerstation die zu übertragenden Signale gemäß einem CDMA-Verfahren im digitalen Basisband mit einem aus einer Anzahl von Chips bestehenden individuellen Spreizkode zu einem jeweiligen Übertragungblock gespreizt. Bei einer Impulsformung der Chips des Übertragungsblocks wird eine jeweilige Impulsantwort gespeichert, und mittels Filterkoeffizientensätzen eine Abtastung der gespeicherten Impulsantwort durchgeführt. Die Filterkoeffizientensätze weisen dabei einen zeitlichen Versatz zueinander auf, der einer gegenüber der Chiprate vielfachen Taktrate entspricht. Die Steuerung eines Zeitversatzes für den Übertragungsblock erfolgt mittels einer Auswahl eines Abtastzeitpunktes und/oder eines Filterkoeffizientensatzes.

Die erfindungsgemäße Ausgestaltung ermöglicht vorteilhaft, daß durch die Generierung der Übertragungsblöcke auf der Basis einer Taktrate, die dem Vielfachen der Chiprate entspricht, ein zumindest einem Taktratenzyklus entsprechender kleinster Zeitversatz (Timing Advance) erzielt werden kann.

Die Speicherung der Impulsantworten kann beispielsweise unabhängig von der Impulsformung mittels eines nachgeschalteten und taktratengesteuerten Speichers erfolgen, oder in der Impulsformung integriert sein.

Durch die Abtastung der gespeicherten Impulsantwort mittels mehrerer Filterkoeffizientensätze kann vorteilhaft über eine größere Zeitversatzbreite geregelt werden, wenn die Abtastung mit einer niedrigeren Taktrate als die zeitliche Differenz zwischen den Abtastzeitpunkten der Filterkoeffizientensätze durchgeführt wird.

Gemäß einer Weiterbildung wird die Taktrate zu einem ganzzahligen Vielfachen der Chiprate gewählt. Besonders vorteilhaft erscheint. dabei ein $2^n$-faches Vielfaches der Chiprate, da die Taktrate durch einen Einsatz einer Kaskade von Taktratenteilern auch für die Generierung der Chiprate verwendet werden kann.

Die Filterkoeffizientensätze können gemäß einer weiteren Weiterbildung vorteilhaft beispielsweise in einer Speichereinrichtung gespeichert sein und abhängig von dem geforderten Zeitversatz ausgewählt oder adaptiv ermittelt werden.

Ausführungsbeispiele der Erfindung werden anhand der beiliegenden Zeichnungen näher erläutert.

Dabei zeigen

FIG 1 ein Blockschaltbild eines Funk-Kommunikationssystems,

FIG 2 eine schematische Darstellung der Rahmenstruktur einer Funkschnittstelle mit einem TD/CDMA-Teilnehmerseparierungsverfahren,

FIG 3 ein Ablaufdiagramm für die Synchronisationssteuerung für die Signalübertragung in Aufwärtsrichtung,

FIG 4 ein Blockschaltbild eines Sendezweigs einer Teilnehmerstation,

FIG 5 ein Blockschaltbild der Spreizung und Modulation von Signalen in dem Sendezweig der FIG 3, und

FIG 6 eine Generierung von mehreren Filterkoeffizientensätzen.

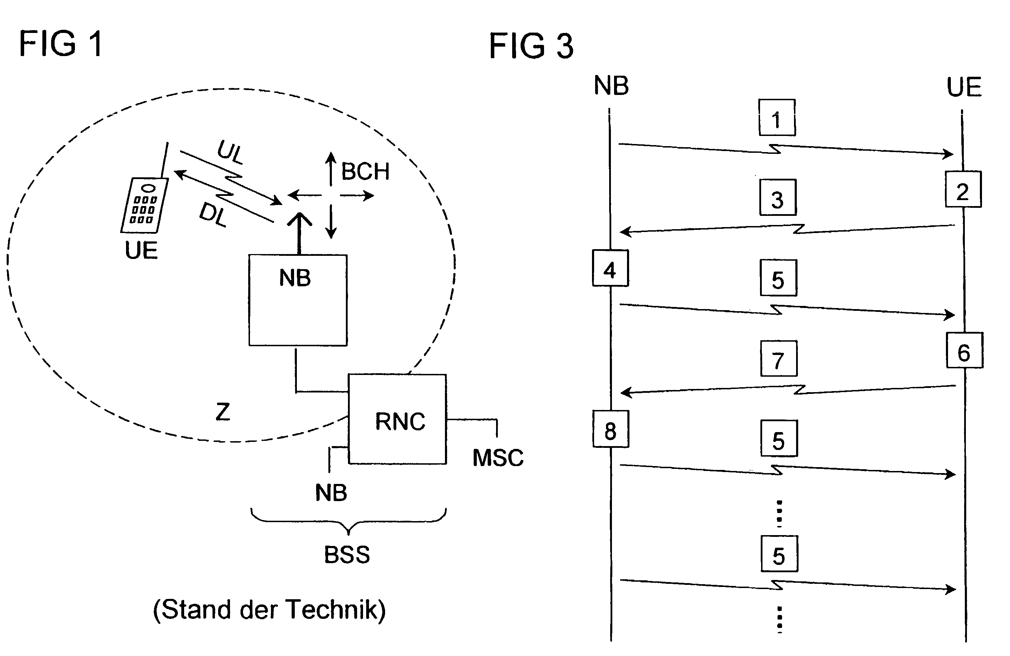

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (BSS - Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (NB - Node B) auf.

Eine Basisstation NB kann über eine Funkschnittstelle Verbindungen zu Teilnehmerstationen UE (UE - User Equipment) aufbauen und unterhalten. Durch jede Basisstation NB wird zumindest eine Funkzelle Z gebildet. Die Größe der Funkzelle Z wird in der Regel durch die Reichweite eines allgemeinen Signalisiaerungskanals (BCH - Broadcast Channel), der von den Basisstationen NB mit einer jeweils maximalen und konstanten Sendeleistung gesendet wird, bestimmt. Bei einer Sektorisierung oder bei hierarchischen Zellstrukturen können pro Basisstation NB auch mehrere Funkzellen Z versorgt werden. Die Funktionalität dieser Struktur ist auf andere Funk-Kommunikationssysteme übertragbar, in denen die Erfindung zum Einsatz kommen kann.

Die Basisstationen NB des einleitend referenzierten TD-SCDMA-Mobilfunksystems weisen Antennen mit veränderbarer Richtcharakteristik auf, so daß nach einer Richtungsbestimmung für den Empfang und für bestimmte Aussendungen eine gezielte Ausrichtung der Richtcharakteristik auf eine Teilnehmerstation UE erfolgen kann. Der allgemeine Signalisierungskanal BCH wird omnidirektional gesendet und die ersten Zugriffe der Teilnehmerstationen UE in einem Kanal mit willkürlichem Zugriff RACH (Random Access Channel) werden ebenfalls omnidirektional empfangen. Die übrigen Aussendungen der Basisstation NB und der Empfang werden ansonsten richtungsselektiv durchgeführt. Dieses betrifft auch die dem erfolgreichen Erstzugriff folgenden Aussendungen in dem RACH und dem Bestätigungskanal FACH.

Das Beispiel der FIG 1 zeigt eine Teilnehmerstation UE, die sich in der Funkzelle Z einer Basisstation NB befinden. Die Teilnehmerstation UE hat eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindung wird durch einen oder mehrere der Teilnehmerstation UE zugeteilte Spreizkodes von parallel in der Funkzelle Z aufgebauten Kommunikationsverbindungen separiert, wobei die Teilnehmerstation UE jeweils alle aktuell in der Funkzelle Z zugeteilten Spreizkodes für den Empfang der Signale der eigenen Kommunikationsverbindung gemäß dem bekannten Joint-Detection-Verfahren nutzt.

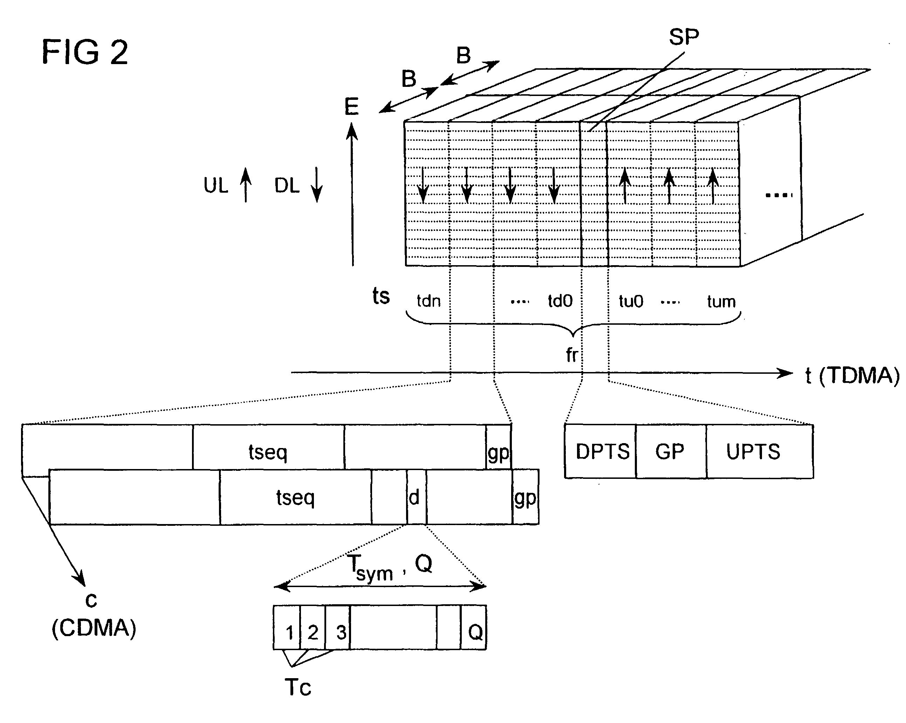

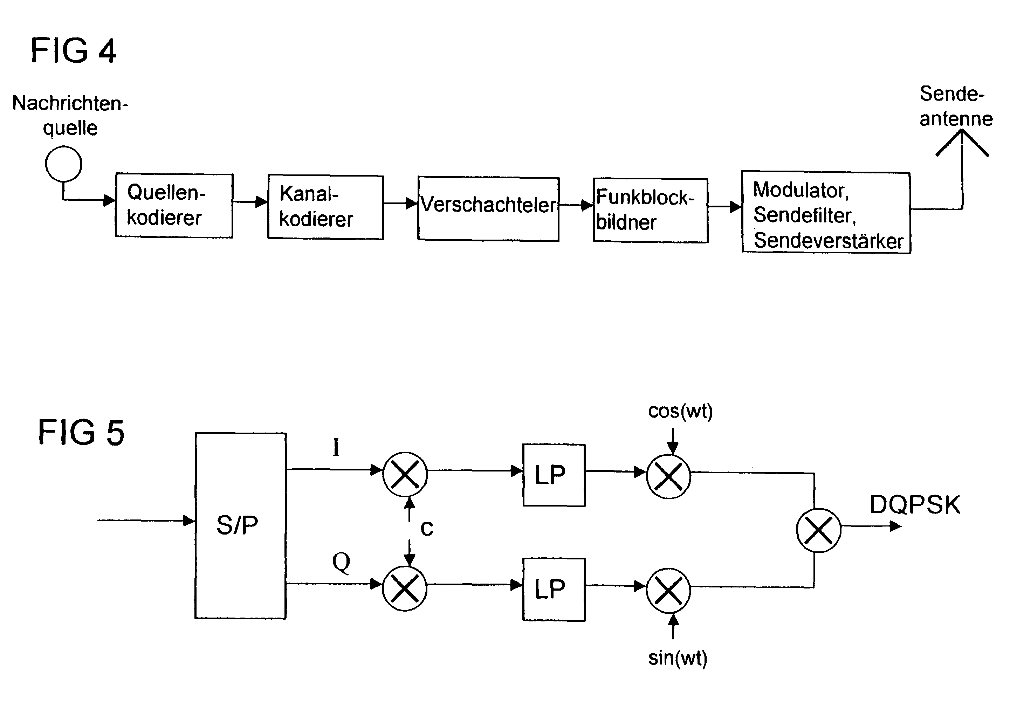

Die Rahmenstruktur der Funkübertragung des TD-SCDMA-Mobilfunksystems ist aus der FIG 2 ersichtlich. Die Funkschnittstelle ist als eine breitbandige Funkschnittstelle mit einem Frequenzband B = 1,6 MHz (somit drei Frequenzbänder pro 5 MHz), mit einer Zeitrahmendauer von 5 ms (somit zwei Zeitrahmen fr pro UTRA-Zeitrahmen), mit 7 Zeitschlitzen ts einer jeweiligen Länge von 675 us für Verkehrskanäle, sowie mit CDMA-Teilnehmerseparierung unter Nutzung von 16 unterschiedlichen Spreizkodes c0 bis c15 (Siehe FIG 3) ausgebildet.

Bei dem dargestellten TDD-Übertragungsverfahren entspricht das Frequenzband B für die Aufwärtsrichtung UL dem Frequenzband B für die Abwärtsrichtung DL. Gleiches wiederholt sich für weitere Trägerfrequenzen. Durch die variable Zuordnung der Zeitschlitze ts für die Auf- oder Abwärtsrichtung UL, DL können vielfältige asymmetrische Ressourcenzuteilungen vorgenommen werden. Ein Teil der Zeitschlitze td0...tdn wird entsprechend für die Signalübertragung in Abwärtsrichtung DL (Downlink) und die übrigen Zeitschlitze tu0...tum für die Signalübertragung in Aufwärtsrichtung UL (Uplink) genutzt. Die Parameter n, m und somit der Umschaltpunkt SP (Switching Point) sind individuell an einen aktuellen Bedarf adaptierbar, wobei jeweils die Beziehung n+m+2=7 gilt. Im zeitlichen Anschluß an den ersten Zeitschlitz td0 für die Abwärtsrichtung DL folgt eine Schutzzeit zur Separierung der Übertragungsrichtungen DL und UL, die den Umschaltpunkt SP darstellt.

Die Schutzzeit besteht aus einem Abwärts-Pilotzeitschlitz DPTS (Downlink Pilot Time Slot) mit einer Länge von 75 us zum Senden von durch einen Satz sogenannter Gold-Codes unterschiedener Synchronisationssequenzen, aus einer Schutzzeit GP (Guard Period) mit einer Länge von 75 us für den Umschaltvorgang zwischen Senden und Empfangen in der Basisstation NB, sowie aus einem Aufwärts-Pilotzeitschlitz UPTS (Uplink Pilot Time Slot) mit einer Länge von 125 us zum Senden einer Synchronisationssequenz bei einem Verbindungsaufbauversuch durch eine Teilnehmerstation UE mit einer anschließenden Signalisierung auf dem Kanal zum wahlfreien Zugriff RACH. Zur Unterscheidung mehrerer Teilnehmerstationen UE bei dieser Zugriffsprozedur wird wiederum ein Satz Gold-Codes verwendet.

Innerhalb der Zeitschlitze ts werden Informationen mehrerer Verbindungen in Funkblöcken übertragen. Die Daten d sind verbindungsindividuell mit einer Feinstruktur, einem Spreizkode c, gespreizt, so daß empfangsseitig beispielsweise n Verbindungen durch diese CDMA-Komponente separierbar sind. Die Spreizung von einzelnen Symbolen der Daten d bewirkt, daß innerhalb der Symboldauer $T_{sym}$ Q Chips der Dauer Tc übertragen werden. Die Q Chips bilden dabei den verbindungsindividuellen Spreizkode c. In den Funkblöcken ist weiterhin eine Kanalmeßsequenz tseq für eine empfangsseitige Kanalschätzung eingebettet. Ein Funkblock wird jeweils mit einer Schutzzeit gp abgeschlossen.

Die verwendeten Parameter der Funkschnittstelle für das beschriebene TD-SCDMA-System sind vorteilhafterweise:

| Chiprate | 1,28 Mchip/s |
|---|---|
| Rahmendauer | 5 ms |
| Anzahl Zeitschlitze | 7 (Verkehrskanäle) |
| Dauer eines Zeitschlitzes | 675 $\mu$s |
| Spreizfaktor | 1 bis 16 |
| Bandbreite | 1,6 MHz |

Diese Parameter ermöglichen eine bestmögliche Harmonisierung mit dem UTRA TDD- und FDD-Modus (FDD frequency division duplex) sowie dem bekannten GSM-Mobilfunksystem.

In der FIG 3 ist ein Ablaufdiagramm einer Signalisierung zwischen einer Basisstation NB und einer Teilnehmerstation UE dargestellt.

Von der Basisstation NB werden periodisch in dem allgemeinen Signalisierungskanal BCH Organisationsinformationen über das Mobilfunksystem in dem Funkversorgungsbereich der Basisstation NB gesendet (Schritt 1). Bei einem Einschalten der Teilnehmerstation UE ermittelt diese zunächst ein passendes Frequenzband und wählt anschließend mittels einer in dem Abwärts-Pilotzeitschlitz DPTS gesendeten stärksten Synchronisationssequenz eine geeignete benachbarte Basisstation NB aus. Nach der Auswertung der Organisationsinformationen des BCH der ausgewählten Basisstation NB bestimmt die Teilnehmerstation UE anhand der Empfangsstärke des BCH eine korrespondierende Sendeleistung sowie anhand der Synchronisationssequenz einen Empfangszeitpunkt (Schritt 2) für ein nachfolgendes Senden einer Synchronisationssequenz in dem Aufwärts-Pilotzeitschlitz UPTS (Schritt 3), wobei sie einen geeigneten Gold-Code für die Synchronisationssequenz auswählt. Diese Prozedur wird als Synchronisation in Abwärtsrichtung (Downlink Synchronisation) bezeichnet.

Trotz des Empfangs der Synchronisationssequenz der Basisstation NB zur Synchronisation in Abwärtsrichtung ist die Entfernung der Teilnehmerstation UE zu der Basisstation NB weiterhin unbekannt, was nachteilig zu einer nicht synchronisierten Signalübertragung in Aufwärtsrichtung führt. Wenn nun die Basisstation NB die von der Teilnehmerstation UE in dem Aufwärts-Pilotzeitschlitz UPTS gesendete Synchronisationssequenz in einem bestimmten Empfangsfenster empfängt, ermittelt sie die Empfangsstärke sowie den Zeitversatz. Aus diesen ermittelten Parametern bestimmt die Basisstation NB den Inhalt der Synchronisationsinformation SS (Schritt 4), die sie nachfolgend in einem Bestätigungskanal FACH zu der Teilnehmerstation UE sendet (Schritt 5). Nach dem Empfang der Synchronisationsinformation SS in dem FACH steuert die Teilnehmerstation UE die Sendeleistung sowie den erforderlichen Zeitversatz für die Synchronisation der Signalübertragung in Aufwärtsrichtung (Schritt 6). Anschließend kann die Verbindungsprozedur fortgesetzt bzw. eine Datenübertragung in einem zugewiesenen Übertragungskanal erfolgen (Schritt 7).

Durch die Tatsache, daß die Trainingssequenzen mehrerer aktiver Teilnehmerstationen in einem gleichen Zeitschlitz nur zeitversetzte Versionen eines einzigen periodischen Basiscodes sind, ist die Basisstation NB in der Lage, die Trainingssequenzen sequentiell zu detektieren. Entsprechend einer bestimmten Toleranz der Teilnehmerstationen für die Synchronisation in Aufwärtsrichtung kann die Basisstation NB hierdurch periodisch, beispielsweise auf Zeitrahmenbasis, eine jeweilige Synchronisationsinformation SS ermitteln (Schritt 8) und zu den Teilnehmerstationen UE in dem FACH senden (Schritt 5).

Die Synchronisationsinformation SS setzt sich beispielsweise aus Schicht 1-Signalisierungen PC (Power Control) und TA (Timing Advance) zusammen. Nach dem beschriebenen Stand der Technik wird zumindest für den zeitlichen Parameter ein fester Wert angenommen, d.h. die Steuerung des Zeitversatzes erfolgt mit einer festen Schrittweite. So wird der Zeitversatz beispielsweise auf einer Chip-Basis geregelt, d.h. bei jeder signalisierten Synchronisationsinformation SS wird die Zeitbasis für die Signalübertragung in Aufwärtsrichtung um ein Chip bzw. nach der Erfindung um einen Taktratenzyklus vorgezogen oder verzögert.

Bei einem CDMA-Übertragungsverfahren kommt beispielsweise eine Struktur für die Sendeeinrichtung der Teilnehmerstation nach der FIG 4 zum Einsatz. Auf der Funkschnittstelle soll ein Datenstrom einer Nachrichtenquelle übertragen werden. Hierzu wird eine Quellen- und Kanalkodierung sowie eine anschließende Verschachtelung (Interleaving) des Datenstroms durchgeführt. Nach einer Wandlung des Datenstroms in Funkblöcke erfolgt eine Modulation mit einer Spreizung durch einen individuellen Spreizkode, der eine Unterscheidung von Teilnehmersignalen innerhalb des Signalgemischs auf der Funkschnittstelle zuläßt. Anschließend wird eine Filterung des modulierten Signals in einem Chipimpulsfilter zur Impulsformung der Übertragungsblöcke, eine Digital/Analog-Wandlung sowie eine Verstärkung vorgenommen, bevor das Signal über eine Sendeantenne der Teilnehmerstation abgestrahlt wird.

In der FIG 5 ist in detailierterer Darstellung eine beispielshafte Abfolge bei einer Spreizung und Modulation erläutert, wie sie aus dem referenzierten Stand der Technik nach CATT aus dem Kapitel 4.5.1.2 Spreading and Modulation, S. 17, Figure 4.9, für die in Abwärtsrichtung genutzten physikalischen Übertragungskanäle bekannt ist. Diese Abfolge kann in gleicher Weise in der Teilnehmerstation für die Spreizung und Modulation der in Aufwärtsrichtung gesendeten physikalischen Übertragungskanäle verwendet werden.

Ein jeweiliges Paar bestehend aus zwei Bits wird einer seriell/parallel-Wandlung S/P unterworfen und auf einen I- bzw. Q-Zweig abgebildet. Der I- und Q-Zweig werden anschließend mit einem gleichen individuellen Spreizkode c zu der Chiprate gespreizt. In einem nachgeschalteten Tiefpaßfilter LP wird jedes Chip einer Impulsformungs-Filterung unterzogen. Die Impulsantwort h(t) des Impulsformungs-Filters entspricht dabei beispielsweise einem RRC (Root-Raised Cosine), wobei die Impulsantwort h(t) als

$$h(t) = \frac{\sin \pi \frac{t}{T_c}}{\pi \frac{t}{T_c}} \cdot \frac{\cos \alpha\pi \frac{t}{T_c}}{1-4\alpha^2 \frac{t^2}{T_c^2}}$$

mit einem roll-off Faktor $\alpha$ = 0,22 und einer Chipdauer Tc = 0,78125us definiert ist.

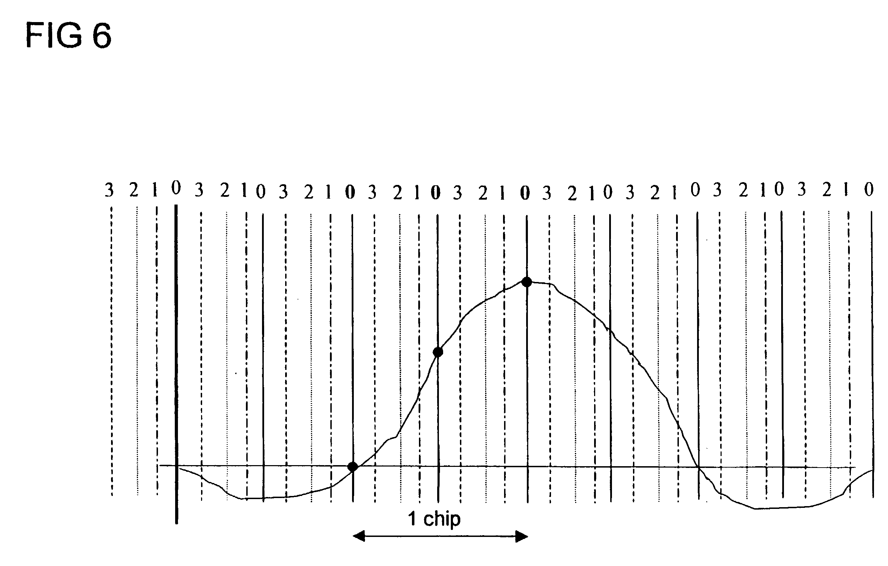

In dem Impulsformungsfilter kann entsprechend der Erfindung in unterschiedlicher Weise eine Regelung des gewünschten Zeitversatzes für die Synchronisation der Signalübertragung in Aufwärtsrichtung erfolgen. Eine beispielhafte Realisierung der beschriebenen alternativen Lösungen wird nachfolgend bezugnehmend auf die FIG 6 und die nachfolgende Tabelle erläutert.

Das Beispiel der FIG 6 basiert auf dem Zusammenwirken von zwei konfigurierbaren Parametern zur Generierung eines bestimmten Zeitversatzes bei der Impulsformung in dem Impulsformungs-Filter. Die Parameter sind dabei eine Auswahl eines bestimmten Filterkoeffizientensatzes 0...3 bei einer beispielhaften Überabtastung mit einem Zweifachen der Chiprate, und zusätzlich einer Zwischenspeicherung der Impulsantwort. Jeder Koeffizientensatz 0...3 entspricht einer Abtastung der um jeweils 1/8 Chipdauer zeitversetzten Impulsantwort des Impulsformungs-Filters. Die Kombination der zweifachen Überabtastung mit den zeitversetzten Koeffizientensätzen ergibt somit eine zeitliche Auflösung von 1/8 Chipdauer. Jeder Filterkoeffizientensatz entspricht damit einer Abtastung einer um 1/8 Chip zeitversetzten Version der gespeicherten Impulsantwort. Die Filterkoeffizientensätze 0...3 sind dabei beispielsweise in einem speziellen Speicher abgespeichert und werden entsprechend dem gewünschten Zeitversatz TA ausgewählt. Alternativ hierzu kann ein einziger Filterkoeffizientensatz verwendet werden, der um jeweils einen bestimmten Zeitversatz verschoben und adaptiv angepaßt wird.

Die nachfolgende Tabelle zeigt die Kombinationsmöglichkeiten der beiden beschriebenen Parameter und den damit erzielbaren Zeitversatz TA.

| TA in Chip | Addiere 1/2 Chip | Filterkoeffizientensatz |
|---|---|---|
| 0 | nein | 0 |
| 1/8 | nein | 1 |
| 1/4 | nein | 2 |
| 3/8 | nein | 3 |
| 1/2 | ja | 0 |
| 5/8 | ja | 1 |
| ... | ... | ... |

Die in der FIG 6 dargestellten und durch die Nummer des Filterkoeffizientensatzes gekennzeichneten jeweiligen Abtastpunkte sind auf den Filterkoeffizientensatz 0 ohne zusätzliche Zwischenspeicherung bzw. Addition von 1/2 Chip (nein) bezogen. Aus der FIG 6 wird deutlich, daß durch den relativen Versatz zwischen den Abtastzeitpunkten in Schritten, die 1/8 der Chipdauer entsprechen, und der eine große Regelbreite für den Zeitversatz TA bei einer gleichzeitig kleinen zeitlichen Variation (1/8 Chipdauer) und somit eine sehr genaue zeitliche Regelung der Aussendung von Signalen in der Aufwärtsrichtung ermöglicht wird.

**Patentansprüche**

1. Verfahren zur Synchronisation einer Signalübertragung in Aufwärtsrichtung (UL) in einem Funk-Kommunikationssystem, wobei das Funk-Kommunikationssystem ein CDMA-Teilnehmerseparierungsverfahren für die Signalübertragung auf einer Funkschnittstelle zwischen einer Basisstation (NB) und zumindest einer Teilnehmerstation (UE) unterstützt, bei dem
in der Teilnehmerstation (UE) die zu übertragenden Signale im digitalen Basisband mit einem aus einer Anzahl von Chips bestehenden individuellen Spreizkode (c) zu einem jeweiligen Übertragungblock gespreizt werden,
**dadurch gekennzeichnet, daß**
bei einer Impulsformung der Chips des Übertragungsblocks eine jeweilige Impulsantwort gespeichert wird,
mittels Filterkoeffizientensätzen (0,1,2,3) eine Abtastung der gespeicherten Impulsantwort durchgeführt wird, wobei die Filterkoeffizientensätze (0,1,2,3) einen einer gegenüber der Chiprate vielfachen Taktrate entsprechenden zeitlichen Versatz zueinander aufweisen, und
mittels einer Auswahl eines Abtastzeitpunktes und/oder eines Filterkoeffizientensatzes (0,1,2,3) ein Zeitversatz für den Übertragungsblock gesteuert wird.

2. Verfahren nach Anspruch 1, bei dem
die Taktrate als eine ganzzahlig Vielfache der Chiprate, insbesondere $2^n$-fache mit n = 1,2,..., gewählt wird.

3. Verfahren nach Anspruch 1, bei dem
die Filterkoeffizientensätze (0,1,2,3) adaptiv ermittelt und/oder gespeichert werden.

4. Teilnehmerstation (UE) eines Funk-Kommunikationssystems, mit

- Mitteln zur Ermittlung eines Zeitversatzes für die Aussendung von Signalen auf einer Funkschnittstelle zu einer Basisstation (NB),
- Mitteln zur Spreizung der zu übertragenden Signale mit einem aus einer Anzahl von Chips bestehenden Spreizkode (c) in einem digitalen Basisband,
- Mitteln zum Speichern einer bei einer Impulsformung der Chips generierten Impulsantwort,
- Mitteln zum Abtasten der gespeicherten Impulsantwort mit mehreren Filterkoeffizientensätzen (0,1,2,3), wobei die Filterkoeffizientensätze (0,1,2,3) einen einer gegenüber der Chiprate vielfachten Taktrate entsprechenden zeitlichen Versatz zueinander aufweisen, und
- Mitteln zum Steuern des Zeitversatzes zum Aussenden der Signale mittels einer Auswahl eines Abtastzeitpunktes und/oder eines Filterkoeffizientensatzes (0,1,2,3).

5. Teilnehmerstation (UE) gemäß Anspruch 4, mit

Mitteln zum Speichern und/oder zum adaptiven Ermitteln der Filterkoeffizientensätze (0,1,2,3).

**Claims**

1. Method of carrying out an uplink (UL) synchronisation of the signal transmission in a radio communication system, in which the radio communication system supports a CDMA subscriber separation method for the signal transmission on a radio interface between a base station (NB) and at least one subscriber station (UE), and in which in the subscriber station (UE) the signals to be transmitted in the digital baseband are spread over a corresponding transmission block with the aid of an individual spreading code (c) consisting of a number of chips, **characterised in that** whilst the chips of the transmission block are undergoing pulse shaping a corresponding impulse response is buffered, and **in that** the buffered impulse response is sampled with the aid of filter coefficient sets (0, 1, 2, 3), such that the filter coefficient sets (0, 1, 2, 3) have a timing advance relative to one another corresponding to a clock rate which is a multiple of the chip rate, and **in that** a timing advance for the transmission block is controlled by selecting a sampling point and/or a filter coefficient set (0, 1, 2, 3).

2. Method according to Claim 1, in which the clock rate is selected as a whole number multiple of the chip rate, in particular a $2^n$-fold multiple where n = 1, 2, ..., and so on.

3. Method according to Claim 1, in which the filter coefficient sets (0, 1, 2, 3) are adaptively determined and/or buffered.

4. Subscriber station (UE) of a radio communication system, with

   - Means for determining a timing advance for transmitting signals on a radio interface to a base station (NB),
   - Means for spreading the signals to be transmitted with the aid of a spreading code (c) consisting of a number of chips in a digital baseband,
   - Means for storing an impulse response generated when chips are undergoing pulse shaping,
   - Means for sampling the stored impulse response with the aid of a plurality of filter coefficient sets (0, 1, 2, 3), such that the filter coefficient sets (0, 1, 2, 3) have a timing advance relative to one another corresponding to a clock rate which is a multiple of the chip rate, and
   - Means for controlling the timing advance for transmitting the signals by selecting a sampling point and/or a filter coefficient set (0, 1, 2, 3).

5. Subscriber station (UE) according to Claim 4, with means for storing and/or adaptively determining the filter coefficient sets (0, 1, 2, 3).

**Revendications**

1. Procédé pour la synchronisation d'une transmission de signaux dans le sens ascendant (UL) dans un système de radiocommunication, le système de radiocommunication supportant un procédé de séparation d'abonné CDMA pour la transmission de signaux sur une interface radio dans une station de base (NB) et au moins une station d'abonné (UE), dans lequel, dans la station d'abonné (UE), les signaux à transmettre sont étalés dans la bande de base numérique avec un code d'étalement (c) individuel et comprenant un certain nombre d'éléments pour former un bloc de transmission respectif,
   **caractérisé en ce que**,
   lors d'une mise en forme d'impulsion des éléments du bloc de transmission, on mémorise une réponse impulsionnelle respective,
   un balayage de la réponse impulsionnelle mémorisée est effectué au moyen de groupes de coefficients de filtre (0, 1, 2, 3), les groupes de coefficients de filtre (0, 1, 2, 3) présentant un décalage dans le temps les uns par rapport aux autres correspondant à un débit de synchronisation égal à plusieurs fois le débit des éléments, et un décalage de temps pour le bloc de transmission étant commandé au moyen d'un choix d'un moment de balayage et/ou d'un groupe de coefficients de filtre (0, 1, 2, 3).

2. Procédé selon la revendication 1, dans lequel le débit de synchronisation est choisi sous la forme d'un multiple entier du débit des éléments, en particulier $2^n$ fois avec n = 1, 2, ...

**3.** Procédé selon la revendication 1, dans lequel
les groupes de coefficients de filtre (0, 1, 2, 3) sont calculés de façon adaptative et/ou mémorisés.

**4.** Station d'abonné (UE) d'un système de radiocommunication, comprenant :

- des moyens pour le calcul d'un décalage de temps pour l'émission de signaux sur une interface radio à une station de base (NB),
- des moyens pour l'étalement des signaux à transmettre avec un code d'étalement (c) comprenant un certain nombre d'éléments dans une bande de base numérique,
- des moyens pour la mémorisation d'une réponse impulsionnelle générée lors de la mise en forme d'impulsion des éléments,
- des moyens pour le balayage de la réponse impulsionnelle mémorisée avec plusieurs groupes de coefficients de filtre (0, 1, 2, 3), les groupes de coefficients de filtre (0, 1, 2, 3) présentant un décalage dans le temps les uns par rapport aux autres correspondant à un débit de synchronisation égal à plusieurs fois le débit des éléments, et
- des moyens pour la commande du décalage de temps pour l'émission des signaux au moyen d'un choix d'un moment de balayage et/ou d'un groupe de coefficients de filtre (0, 1, 2, 3).

**5.** Station d'abonné (UE) selon la revendication 4, avec
des moyens pour la mémorisation et/ou le calcul adaptatif des groupes de coefficients de filtre (0, 1, 2, 3).

# FIG 1

UL

DL

UE

↑BCH↓

NB

Z

RNC — MSC

NB

BSS

(Stand der Technik)

# FIG 3

NB      UE

1

2

3

4

5

6

7

8

5

5

EP 1 226 659 B1

FIG 2

EP 1 226 659 B1

EP 1 226 659 B1

## FIG 4

Nachrichtenquelle

Sendeantenne

```
○ → [ Quellen-   ] → [ Kanal-   ] → [ Verschachteler ] → [ Funkblock- ] → [ Modulator,      ]
     [ kodierer  ]     [ kodierer ]                        [ bildner   ]     [ Sendefilter,    ]
                                                                             [ Sendeverstärker ]
```

## FIG 5

```
            ┌─────┐                                cos(wt)
            │     │  I        ⊗ ──→ [ LP ] ──→ ⊗ ↓
     ──→    │ S/P │        ↑                      │
            │     │        c                       ⊗ ──→ DQPSK
            │     │  Q        ⊗ ──→ [ LP ] ──→ ⊗ ↑
            └─────┘                            sin(wt)
```

FIG 6